# EUROPEAN PATENT APPLICATION

(11) **EP 3 696 346 A1**
(43) Date of publication of application: **19.08.2020**
(21) Application number: 18879221.2
(22) Date of filing: 29.10.2018
(51) Int. Cl.: E04H 6/00, E04H 6/42, B62H 3/00, G07F 17/00

(54) **TRIGGER INDUCTION MODULE, SMART PARKING RACK, VEHICLE, STANDARDIZED PARKING SYSTEM AND MANAGEMENT METHOD THEREFOR**

(30) Priority: 17.11.2017 CN 201711146590; 17.11.2017 CN 201721542561 U; 17.11.2017 CN 201721541994 U; 17.11.2017 CN 201721542035 U; 29.12.2017 CN 201721919643 U; 13.02.2018 CN 201810150594; 13.02.2018 CN 201820257546 U
(71) Applicant: Youon Technology Co., Ltd., Jiangsu 213000 (CN)
(72) Inventor: HUANG, Deyun, CHangzhou Jiangsu 213000 (CN); CENG, Jian, CHangzhou Jiangsu 213000 (CN); YIN, Yamin, CHangzhou Jiangsu 213000 (CN); CAO, Wenan, CHangzhou Jiangsu 213000 (CN); LIU, Gang, CHangzhou Jiangsu 213000 (CN); WANG, Xihan, CHangzhou Jiangsu 213000 (CN)
(74) Representative: Ridderbusch, Oliver
(86) International application number: PCT/CN2018/112314
(87) International publication number: WO 2019/095982

(57) **Abstract**

The invention discloses a triggering induction module set, a smart parking rack, a Vehicle, a standardized parking system and a management method therefor. The Vehicle includes a Vehicle and an identity induction module disposed on the Vehicle; the identity induction module is a triggering device or an induction device; the triggering device is internally provided with a trigger; the induction device includes a master controller, a near-field communication module and/or a far-field communication module, an inductor and a power supply module; the power supply module includes a solar panel and a rechargeable battery, and supplies power to the master controller; and the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module. The Vehicle is provided with the identity induction module, and the induction device matching therewith is disposed in a standardized parking area, so that relevant information is sent after triggering induction, thus greatly facilitating management.

## Description

### Technical Field

The present invention relates to a triggering induction module set, a smart parking rack, a Vehicle, a standardized parking system and a management method therefor.

### Background Art

Development of shared Vehicles meets health and environmental protection requirements of people, thus being developed rapidly and put into use in large batches in major cities. The shared Vehicles have a lot of problems on random parking and placement while bringing convenience to the citizens, and there are serious phenomena such as random parking of the shared Vehicles by users, occupation of sidewalks and even motor vehicle lanes, and the like, thus bringing a variety of troubles to urban management. Faced with the convenience and the problems brought by the shared Vehicles, the government encourages the public to use the shared Vehicles for healthy and environmentally friendly travel on one hand, and actively guides "standardized" parking on the other hand. In addition, electric motorcycles on the market also have a larger volume, involving in common occurrence of illegal parking, so that the standardized parking is in greater and greater demand. On the other hand, public Vehicles with piles are models in the standardized parking, but a large number of bike docking port are needed, and the users are restricted by returning the Vehicles to the piles. With an increasing demand of the users for convenience in taking and returning the Vehicles, a solution that meets the standardized parking, convenient mounting and cost saving at the same time is needed.

### Summary of the Invention

The present invention is intended to provide a triggering induction module set, a smart parking rack, a Vehicle, a standardized parking system and a management method therefor.

The present invention discloses a triggering induction module set for parking a Vehicle, the triggering induction module set includes a triggering device and an induction device which are respectively disposed on a parking rack where the Vehicle is parked and the Vehicle, or disposed on the Vehicle and the parking rack; and when the Vehicle is placed in the parking rack, the triggering device and the induction device form triggering induction, and the induction device reads the triggering device and sends an arrival induction signal to a safety lock of the Vehicle, thus controlling the safety lock to enter a locked state.

Preferably, the triggering device includes a triggering module; the induction device includes an induction module and a control module which are electrically connected; and when the Vehicle is placed in the parking rack, the triggering module and the induction module form the triggering induction, and the control module controls the induction module to read the triggering module and sends the arrival induction signal to the safety lock of the Vehicle, thus controlling the safety lock to enter the locked state.

Preferably, the induction device further includes a power supply module; the power supply module includes a solar panel, a charging circuit, a rechargeable battery and a power supply circuit; and the solar panel charges the rechargeable battery through the charging circuit, and an electric energy outputted by the rechargeable battery is supplied to the control module through the power supply circuit.

Preferably, the induction device further includes a prompting module; and when the triggering device and the induction device form the triggering induction, the prompting module externally sends an acoustical signal or a light signal.

Preferably, a side of the induction device facing the triggering device is an induction surface, and the induction surface is a plane; and a side of the triggering device facing the induction device is a triggering surface, and the triggering surface is a plane.

Preferably, the triggering surface is provided with an anti-collision pad, and the anti-collision pad is made of an elastic material.

Preferably, the induction device is disposed on a front fork of the Vehicle, and the safety lock is disposed on a rear fork of the Vehicle.

The present invention discloses a triggering module set for a parking system, which includes a triggering device and an induction device, the triggering device includes a mounting box and a triggering module disposed in the mounting box, the induction device includes a shell and a circuit board disposed in the shell, wherein the circuit board is provided with a first control module and an induction module, the first control module is electrically connected to the induction module, the induction device is in near-field communication with the triggering device, the induction module switches on a driving circuit when inducing the triggering module, so as to start the first control module to read the triggering device, thus generating a broadcast message and externally sending the broadcast message.

Preferably, the shell includes a front cover, a base and a side cover, wherein the base is L-shaped, two side edges of the base are communicated with each other, one sides of the two side edges facing the outside are respectively provided with a first opening and a second opening, the front cover is fixedly connected to the first opening, the side cover is fixedly connected to the second opening, an L-shaped storage space is formed inside the base, and the circuit board is L-shaped and fixed in the storage space.

Preferably, the induction module includes at least one reed switch, and the reed switch switches on the driving circuit when inducing the triggering device, so as to start the first control module to read the triggering device.

Preferably, the mounting box includes a box body and a cover body, the cover body is fixedly connected to the box body to form a storage space, the triggering module and a storage module are disposed in the storage space, and after being started, the first control module reads the storage module, thus generating the broadcast message and externally sending the broadcast message.

Preferably, the triggering module includes a magnet, and the induction device switches on the driving circuit when inducing the magnet, so as to start the first control module to read the triggering device.

The present invention further discloses a smart parking rack, which includes a rack body and an identity induction module disposed on the rack body; the identity induction module is a triggering device or an induction device; the triggering device is internally provided with a trigger; the induction device includes a master controller, a near-field communication module and/or a far-field communication module, an inductor and a power supply module; the power supply module includes a solar panel and a rechargeable battery, and supplies power to the master controller; and the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module.

Preferably, the master controller of the induction device is a Bluetooth master control board; the near-field communication module is a Bluetooth communication module; and the far-field communication module is a GPRS communication module.

Preferably, the power supply module of the induction device includes the solar panel, a charging circuit, the rechargeable battery and a power supply circuit; the solar panel charges the rechargeable battery through the charging circuit, and an electric energy outputted by the rechargeable battery is supplied to the master controller through the power supply circuit; the Bluetooth master control board includes a Bluetooth chip, a CPU, a FLASH, a RAM and an I/O interface; and an output end of the master controller is electrically connected to an acousto-optic indication module.

Preferably, the master controller, the near-field communication module, the far-field communication module, the inductor, the acousto-optic indication module as well as the charging circuit, the rechargeable battery and the power supply circuit of the power supply module are disposed on an inside surface of a front cover and covered by a rear cover; and the solar panel is disposed on an outside surface of the front cover.

Preferably, the master controller, the near-field communication module, the far-field communication module, the inductor, the acousto-optic indication module as well as the charging circuit, the rechargeable battery and the power supply circuit of the power supply module are disposed on a master circuit board.

Preferably, the trigger of the triggering device is disposed in a mounting box body, and an outside surface of the mounting box body is a triggering surface.

Preferably, the outside surface of the front cover of the induction device close to an end of the inductor is an induction surface; the induction surface is a plane; and the triggering surface of the triggering device is a plane.

Preferably, the triggering surface of the triggering device is provided with a flexible anti-collision pad.

Preferably, the front cover and the rear cover of the induction device are consistent in a cross-sectional shape and are both provided with a groove; and the mounting box body of the triggering device is provided with a groove.

Preferably, a label area is disposed on an outside surface of the rear cover of the induction device.

The present invention further discloses a Vehicle with an identity induction module, which includes a Vehicle and an identity induction module disposed on the Vehicle; the identity induction module is a triggering device or an induction device; the triggering device is internally provided with a trigger; the induction device includes a master controller, a near-field communication module and/or a far-field communication module, an inductor and a power supply module; the power supply module includes a solar panel and a rechargeable battery, and supplies power to the master controller; and the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module.

Preferably, the identity induction module is disposed at a front end of the Vehicle.

Preferably, the master controller of the induction device is a Bluetooth master control board; the near-field communication module is a Bluetooth communication module; and the far-field communication module is a GPRS communication module.

Preferably, the power supply module of the induction device includes the solar panel, a charging circuit, the rechargeable battery and a power supply circuit; the solar panel charges the rechargeable battery through the charging circuit, and an electric energy outputted by the rechargeable battery is supplied to the master controller through the power supply circuit; the Bluetooth master control board includes a Bluetooth chip, a CPU, a FLASH, a RAM and an I/O interface; an output end of the master controller is electrically connected to an acousto-optic indication module; the master controller, the near-field communication module, the far-field communication module, the inductor, the acousto-optic indication module as well as the charging circuit, the rechargeable battery and the power supply circuit of the power supply module are disposed on an inside surface of a front cover and covered by a rear cover; and the solar panel is disposed on an outside surface of the front cover.

Preferably, the master controller, the near-field communication module, the far-field communication module, the inductor, the acousto-optic indication module as well as the charging circuit, the rechargeable battery and the power supply circuit of the power supply module are disposed on a master circuit board.

Preferably, the trigger of the triggering device is disposed in a mounting box body, and an outside surface of the mounting box body is a triggering surface.

Preferably, the outside surface of the front cover of the induction device close to an end of the inductor is an induction surface; the induction surface is a plane; and the triggering surface of the triggering device is a plane.

Preferably, the triggering surface of the triggering device is provided with a flexible anti-collision pad.

Preferably, the front cover and the rear cover of the induction device are consistent in a cross-sectional shape and are both provided with a groove; and the mounting box body of the triggering device is provided with a groove.

Preferably, a label area is disposed on an outside surface of the rear cover of the induction device.

The present invention further discloses a standardized parking system, which includes a Vehicle, a rack and a triggering induction module set; the triggering induction module set is composed of an induction device and a triggering device which are matched with each other; the triggering device is internally provided with a trigger; the induction device includes a master controller, a near-field communication module and/or a far-field communication module, an inductor and a power supply module; the power supply module includes a solar panel and a rechargeable battery, and supplies power to the master controller; the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module; and the induction device and the triggering device are respectively mounted on the Vehicle and the rack, or mounted on the rack and the Vehicle, and triggering induction of the inductor and the trigger is able to be formed at mounting positions.

The present invention further discloses a management method for a standardized parking system, the above standardized parking system is provided, and when the Vehicle is parked in the parking rack, the inductor and the trigger form the triggering induction; the master controller of the induction device receives triggering induction information and transmits the triggering induction information to a smart lock of the Vehicle or a site indicator through the near-field communication module, and the smart lock or the site indicator transmits the triggering induction information to the background server; or the master controller of the induction device receives the triggering induction information and transmits the triggering induction information to the background server through the far-field communication module; or the master controller of the induction device receives the triggering induction information and transmits the triggering induction information to the smart lock of the Vehicle or the site indicator through the near-field communication module, the smart lock or the site indicator transmits the triggering induction information to the background server, and the master controller of the induction device simultaneously transmits the triggering induction information to the background server through the far-field communication module.

By using the above technical solutions, the present invention has the following beneficial effects.
(1) The standardized parking system of the present invention designs a pair of triggering device and induction device capable of being matched to form the triggering induction, and the triggering device and the induction device are respectively disposed on the existing Vehicle (manual or electric) and the existing parking rack, then parking and management may be conveniently standardized without needing to change a structure of the existing Vehicle, and some existing parking racks may be fully used, or the simplest parking rack is put into use, thus having a low cost.
(2) It is not necessary to limit which of the triggering device and the induction device of the present invention is disposed on the Vehicle or the parking rack, as long as the triggering device and the induction device of the present invention are used simultaneously, and the triggering device is low in cost and the induction device is high in cost, so that Vehicle operators and relevant government management departments may dispose the triggering device and the induction device according to actual conditions, such as disposing the induction device on the self-operated Vehicle and disposing the triggering device on the existing parking rack, or disposing the triggering device on the Vehicle operated by others and disposing the induction device on the self-operated and self-built parking rack.
(3) The communication module of the induction device of the present invention may be the near-field communication module, such as Bluetooth, wifi, zigbee and the like, or the far-field communication module, such as GPRS, so that the setting may be selected according to actual conditions. For example, if the smart lock of the Vehicle is provided with the Bluetooth or a parking area is provided with the site indicator, the near-field communication module may be used, and the information is sent by the site indicator (with the GPRS) or the smart lock with the GPRS to the background server. If the smart lock of the Vehicle is not provided with the communication module and the site indicator is not provided, the far-field communication module may be used to send the information to the background server.
(4) The induction device of the present invention is provided with the solar panel which may charge the rechargeable battery, thus improving an endurance of the induction device.
(5) The front cover and the rear cover of the induction device of the present invention and the triggering device of the present invention are all provided with the groove for matching with the mounting positions, so that the induction device is able to be mounted more stably.
(6) The rear cover of the induction device of the present invention is used as a waterproof and dustproof cover and is able to protect electrical components in a box body, thus prolonging a service life of the induction device.
(7) The induction device of the present invention is further provided with the acousto-optic indication module, which is convenient to indicate whether a user reaches a standardized parking position.
(8) The induction surface of the outside surface of the front cover of the induction device of the present invention close to the end of the inductor is the plane, or the triggering surface of the triggering device is set as the plane, so that a maximum induction area is able to be obtained, and an induction triggering effect is better.
(9) The label area is disposed on the outside surface of the rear cover of the induction device of the present invention, and a nameplate, a two-dimensional code and the like may be placed in the label area.
(10) The triggering surface of the triggering device of the present invention is provided with the anti-collision pad to avoid the triggering device from damage by collision of the Vehicle.

### Brief Description of the Drawings

Fig. 1 is a structure diagram of the present invention.
Fig. 2 is a functional block diagram of an induction device of the present invention.
Fig. 3 is a functional block diagram of a Bluetooth master control board used in the induction device of the present invention.
Fig. 4 is a structure diagram of the induction device of the present invention.
Fig. 5 is a principle diagram of Embodiment 1 of the present invention.
Fig. 6 is a principle diagram of Embodiment 2 of the present invention.

Numerals in the drawings are as follows:
1 refers to rack body, 2 refers to triggering device, 2-1 refers to mounting box body, 2-1-1 refers to triggering surface, 2-2 refers to anti-collision pad, 3 refers to induction device, 3-1 refers to front cover, 3-1-1 refers to induction surface, 3-2 refers to rear cover, 3-2-1 refers to label area, 3-3 refers to solar panel, 3-4 refers to master circuit board, 3-5 refers to inductor, 3-6 refers to rechargeable battery, 3-7 refers to Bluetooth chip, and 4 refers to mounting plate.

### Detailed Description of the Preferred Embodiments

A Vehicle parking system provided by the present invention mainly includes a site provided with a base station and a parking rack, a Vehicle, and a triggering induction module set disposed on the Vehicle and the parking rack. The triggering induction module set includes a triggering device and an induction device which are respectively disposed on the parking rack and the Vehicle, or disposed on the Vehicle and the parking rack. When the Vehicle is placed in the parking rack, the triggering device and the induction device form triggering induction. The induction device reads the triggering device and externally sends an arrival induction signal simultaneously, or the triggering device reads the induction device and sends the arrival induction signal to a safety lock of the Vehicle, thus controlling the safety lock to enter a locked state.

Specifically, according to the technical solutions of the present invention, the site occupying a certain area for parking the Vehicle is firstly provided, one or more rows of bike docking port are disposed in a range of the site, and each row of bike docking port is provided with one or more parking racks. Meanwhile, one or more base stations are jointly disposed in the range of the site. The base station is provided with a site indication mark to guide a user to park the Vehicle in the range of the site. Meanwhile, the base station may be used for receiving, collecting or sending information of the parking rack and the Vehicle in the site. The base station includes a first communication module and may be in communication connection with the Vehicle, the parking rack, a management platform and the like respectively through the first communication module. For example, the base station sends a broadcast signal containing a number of available parking racks in the site to the Vehicle that enters the range of the site through the first communication module. The base station receives and collects an arrival induction signal containing identity information of the Vehicle or number information of the parking racks sent by the Vehicle or the parking rack through the first communication module. The base station sends the arrival induction signal containing the identity information of the Vehicle or the number information of the parking racks to the management platform and the like through the first communication module. The first communication module includes a first near-field communication module and/or a first far-field communication module. The first near-field communication module includes a Bluetooth communication module or a radio frequency communication module, and the first far-field communication module includes a GPRS communication module. For example, the base station continuously sends the broadcast signal containing the number of the available parking racks in the site to the Vehicle that enters the range of the site through the first near-field communication module, such as the Bluetooth communication module or the radio frequency communication module. The base station receives and collects the arrival induction signal containing the identity information of the Vehicle or the number information of the parking racks sent by the Vehicle or the parking rack after triggering induction of the triggering induction module set through the first near-field communication module, such as the Bluetooth communication module or the radio frequency communication module. The base station sends the arrival induction signal containing the identity information of the Vehicle or the number information of the parking racks to the management platform through the first far-field communication module, such as the GPRS communication module. The Vehicle includes the triggering device or the induction device disposed on a front fork of the Vehicle, and the safety lock disposed near a rear fork of the Vehicle.

Further introduction is made hereinafter by taking an example that the induction device is disposed on the Vehicle and the triggering device is disposed on the parking rack. When the Vehicle is placed in the parking rack, the triggering device on the parking rack and the induction device on the Vehicle form the triggering induction, and the induction device reads the triggering device and externally sends the arrival induction signal simultaneously. Further, the induction device sends the arrival induction signal to the safety lock of the Vehicle, thus controlling the safety lock of the Vehicle to enter a locked state within a certain period of time. The locked state or an unlocked state of the safety lock herein refers to whether the safety lock may be locked. The locked state of the safety lock refers to that the safety lock may be locked. The unlocked state of the safety lock refers to that the safety lock remains unlocked, which means that the safety lock cannot be locked. Optionally, the induction device sends the arrival induction signal to the base station of the site of the parking rack, which is convenient for the base station to collect the arrival induction signal containing the identity information of the Vehicle or the number information of the parking racks. Optionally, the induction device sends the arrival induction signal to the management platform, which is convenient for the management platform to collect the arrival induction signal containing the identity information of the Vehicle or the number information of the parking racks. The induction device may send the arrival induction signal to the management platform in a direct or indirect mode. For example, the induction device directly sends the arrival induction signal to the management platform, or the induction device firstly sends the arrival induction signal to the safety lock or the base station, and the safety lock or the base station sends the arrival induction signal to the management platform.

The induction device includes an induction module and a control module. When the Vehicle is placed in the parking rack, a triggering module and the induction module form the triggering induction, and the control module controls the induction module to read the triggering module and externally send the arrival induction signal simultaneously. The induction device further includes a power supply module. The power supply module includes a solar panel, a charging circuit, a rechargeable battery and a power supply circuit. The solar panel charges the rechargeable battery through the charging circuit, and an electric energy outputted by the rechargeable battery is supplied to the control module through the power supply circuit. The induction device further includes a prompting module. When the triggering module and the induction module form the triggering induction, the prompting module externally sends an acoustical signal or a light signal.

The induction device further includes a second communication module, and the induction device on the Vehicle may be in communication connection with the base station, the parking rack, the management platform and the like respectively through the second communication module. For example, the induction device on the Vehicle receives the broadcast signal sent by the base station through the second communication module. The induction device on the Vehicle sends the arrival induction signal containing the identity information of the Vehicle or the number information of the parking racks to the safety lock or the base station through the second communication module. The induction device on the Vehicle sends the arrival induction signal containing the identity information of the Vehicle or the number information of the parking racks to the management platform and the like through the second communication module.

The second communication module includes a second near-field communication module and/or a second far-field communication module. The second near-field communication module includes a Bluetooth communication module or a radio frequency communication module, and the second far-field communication module includes a GPRS communication module. For example, the Vehicle receives the broadcast signal sent by the base station through the second near-field communication module, such as the Bluetooth communication module or the radio frequency communication module. The Vehicle sends the arrival induction signal containing the identity information of the Vehicle or the number information of the parking racks to the base station through the second near-field communication module, such as the Bluetooth communication module or the radio frequency communication module. The Vehicle sends the arrival induction signal containing the identity information of the Vehicle or the number information of the parking racks to the management platform and the like through the second far-field communication module, such as the GPRS communication module.

The parking rack includes the triggering device disposed corresponding to a position of the induction device of the Vehicle, or the induction device. Further introduction is made hereinafter by taking the example that the induction device is disposed on the Vehicle and the triggering device is disposed on the parking rack. Other embodiments may refer to each other.

The triggering device includes the triggering module. When the Vehicle is placed in the parking rack, the triggering module and the induction module form the triggering induction, and the triggering module may also read the induction module, so as to read the identity information of the Vehicle. The triggering device may further include a third communication module, and the triggering device on the parking rack may be in communication connection with the base station, the Vehicle, the management platform and the like respectively through the third communication module. For example, the triggering device of the parking rack is in near-field communication with the Vehicle through the third communication module to obtain position information of the Vehicle. The triggering device of the parking rack sends the arrival induction signal containing the identity information of the Vehicle or the number information of the parking racks to the safety lock or the base station through the third communication module. The triggering device of the parking rack sends the arrival induction signal containing the identity information of the Vehicle or the number information of the parking racks to the management platform through the third communication module.

The third communication module includes a third near-field communication module and/or a third far-field communication module. The third near-field communication module includes a Bluetooth communication module or a radio frequency communication module, and the third far-field communication module includes a GPRS communication module. For example, the triggering device of the parking rack is in near-field communication with the Vehicle through the third near-field communication module, such as the Bluetooth communication module or the radio frequency communication module, to obtain the position information of the Vehicle. The triggering device of the parking rack sends the arrival induction signal containing the identity information of the Vehicle or the number information of the parking racks to the safety lock or the base station through the third near-field communication module, such as the Bluetooth communication module or the radio frequency communication module. The triggering device of the parking rack sends the arrival induction signal containing the identity information of the Vehicle or the number information of the parking racks to the management platform through the third far-field communication module.

Further, a side of the induction device facing the triggering device is an induction surface, and the induction surface is a plane. A side of the triggering device facing the induction device is a triggering surface, and the triggering surface is a plane. The triggering surface is provided with an anti-collision pad, and the anti-collision pad is made of an elastic material. A back side of the induction device not facing the triggering device is provided with a label. The induction device and the triggering device are provided with a mounting groove.

By the above configuration, when the Vehicle is placed in the parking rack, the triggering device and the induction device form the triggering induction, and a message with arrival information is directly or indirectly sent to the safety lock, the base station of the site or the management platform, thus greatly facilitating management. Meanwhile, the triggering device and the induction device are respectively disposed on the existing Vehicle (manual or electric) and the existing parking rack, then parking and management may be conveniently standardized without needing to change a structure of the existing Vehicle, and some existing parking racks may be fully used, or the simplest parking rack is put into use, thus having a low cost. It is not necessary to limit which of the triggering device and the induction device is disposed on the Vehicle or the parking rack, as long as the triggering device and the induction device are used simultaneously, and the triggering device is low in cost and the induction device is high in cost, so that operators and relevant government management departments may dispose the triggering device and the induction device according to actual conditions, such as disposing the induction device on the self-operated Vehicle and disposing the triggering device on the existing parking rack, or disposing the triggering device on the Vehicle operated by others and disposing the induction device on the self-operated and self-built parking rack.

In another embodiment, a triggering module set mainly includes a triggering device and an induction device. The induction device includes a shell and a circuit board fixed in the shell, and the circuit board is provided with a first control module (not marked) and an induction module (not marked), wherein the first control module is electrically connected to the induction module. The triggering device includes a mounting box and a triggering module fixed in the mounting box. Therefore, based on the above design, when the triggering device is close to the induction device to a certain distance, the triggering device may be in near-field communication with the induction device, then the induction module in the induction device switches on a driving circuit when inducing the triggering module in the triggering device, so as to start the first control module in the above induction device using the driving circuit. The first control module further reads the triggering device, so as to obtain information stored in the triggering device. Further, the first control module generates a broadcast message containing the information according to the information obtained from the triggering device and externally sends the above information using the broadcast message.

Combined with the application, the above induction device may be disposed on an external Vehicle in a parking system or a parking rack. Correspondingly, the above triggering device may be disposed on the external Vehicle in the parking system or the parking rack. The triggering module set that is started firstly and then reads information of the Vehicle or the parking rack is realized through near-field communication between the induction device and the triggering device, which may reduce consumption of an electric energy of the module set and even the whole parking system, thus realizing an environmental protection effect.

In a preferred solution of the embodiment, the above shell of the induction device specifically includes a front cover, a base and a side cover. The base is L-shaped, two side edges of the base are communicated with each other, and one sides of the two side edges facing the outside are respectively provided with a first opening and a second opening. Therefore, the above front cover is fixedly connected to the first opening, the side cover is fixedly connected to the second opening, and an L-shaped storage space is formed inside the base. Correspondingly, the above circuit board is L-shaped and fixed in the storage space. Preferably, the circuit board may be fixedly connected to the base through screw fastening, riveting, buckling and other modes. For example, a through mounting hole may be disposed in the circuit board, and the circuit board may be accurately fixed on the base by penetrating a fastening screw through the mounting hole. Meanwhile, the front cover and the side cover may also be fixedly connected to the base through screw fastening, riveting, buckling and other modes, such as disposing fixing holes in the base, and disposing positioning holes at positions corresponding to the fixing holes on the front cover and the side cover, so that the front cover and the side cover are fixedly connected to the base respectively by penetrating the fastening screws through the positioning holes. Therefore, not only mounting steps are simplified, but also a connection tightness is improved through the above mounting design.

In the other preferred solution of the embodiment, the above mounting box of the triggering device specifically includes a box body and a cover body. The cover body is fixedly connected to the box body to form a storage space, and the triggering module and a storage module are fixedly mounted in the storage space. Therefore, after being started, the first control module in the induction device reads the storage module to obtain information stored in the storage module, thus generating the broadcast message according to the information and externally sending the broadcast message. Preferably, for example, different storage spaces may be divided in the box body to fix the triggering module and the storage module, so as to prevent mutual interference of direct signals of the triggering module and the storage module. Meanwhile, the above cover body may be fixedly connected to the box body through screw fastening, riveting, buckling and other modes, such as disposing a mounting hole in the cover body, and disposing a limiting hole at a corresponding position on the box body, so that the cover body is fixed on the box body by penetrating the fastening screw through the mounting hole and fixing the fastening screw in the limiting hole.

In another preferred embodiment, the above induction device further includes a power supply module. The power supply module includes a rechargeable battery (not marked) disposed on the circuit board and a solar panel disposed outside the shell, preferably the front cover. Therefore, the solar panel may be used for charging the rechargeable battery, and then the rechargeable battery may supply the electric energy to the circuit board. In the embodiment, the electric energy is supplied to the smart parking system through a solar energy, thus saving energy consumption and improving an environmental protection effect of the smart parking system.

In another preferred embodiment, the induction device further includes an acousto-optic indication module (not marked), and the acousto-optic indication module is electrically connected to the first control module. Therefore, the acousto-optic indication module may receive a control instruction sent by the first control module, and externally sends an acoustical signal or a light signal according to the control instruction, so as to provide information such as safe parking and the like to a user.

In another preferred embodiment, the above induction module in the induction device includes at least one reed switch, then the corresponding triggering device includes at least one magnet. An interaction principle between the reed switch and the magnet is used, and the reed switch switches on the driving circuit when inducing a magnetic field of the magnet, so as to start the above first control module to read the triggering device.

In another preferred embodiment, the above mounting box of the triggering device further includes a triggering surface. When the mounting box is disposed on the parking rack, the triggering surface is disposed on a surface of the mounting box facing an entering direction of the Vehicle. Correspondingly, when the mounting box is disposed on the Vehicle, the triggering surface is disposed on a surface of the mounting box facing the parking rack. Therefore, a surface contacted with the induction device is provided, thus improving effective induction between the triggering device and the induction device, and avoiding mutual matching between the Vehicle and the parking rack from being influenced by a bad contact.

Further, in another preferred embodiment, the above triggering surface is further provided with an anti-collision pad made of an elastic material, thus preventing the triggering device and the induction device from damage by an external force generated by the Vehicle entering the parking rack.

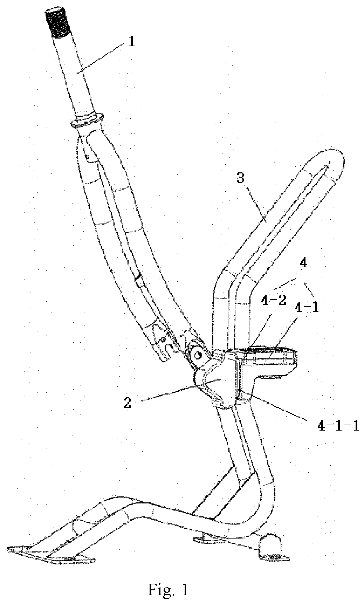

The present invention further discloses a Vehicle with an identity induction module, which includes a Vehicle 1 and an identity induction module disposed on the Vehicle 1. The identity induction module in the embodiment is a triggering device, and the triggering device is internally provided with a trigger, such as a magnet. A structure of the triggering device refers to Fig. 1, which is consistent with a structure of a triggering device disposed on a parking rack 3 in the figure. The trigger of the triggering device 4 is disposed in a mounting box body 4-1, an outside surface of the mounting box body 4-1 is a triggering surface 4-1-1, and the triggering surface 4-1-1 is a plane. The triggering surface 4-1-1 of the triggering device 4 is provided with a flexible anti-collision pad 4-2. The mounting box body 4-1 of the triggering device 4 is provided with a groove.

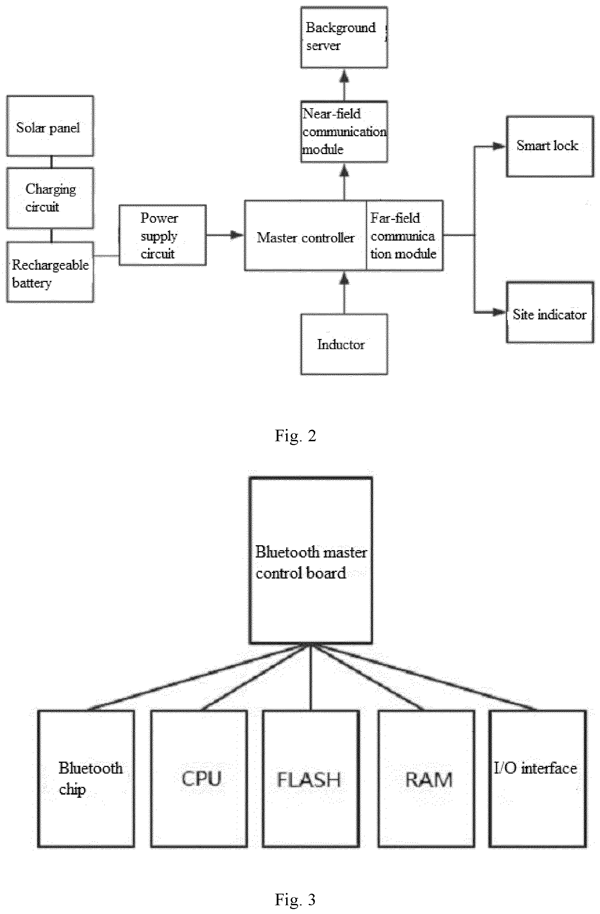

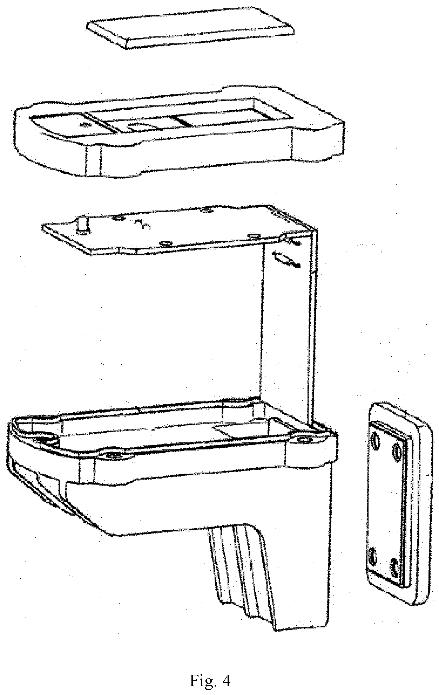

As shown in Fig. 1 to Fig. 4, the identity induction module in the embodiment is an induction device 2. The induction device 2 includes a master controller, a near-field communication module and/or a far-field communication module, an inductor, an acousto-optic indication module and a power supply module. The power supply module includes a solar panel and a rechargeable battery, and supplies power to the master controller. The near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module. The master controller is a Bluetooth master control board. The near-field communication module is a Bluetooth communication module. The far-field communication module is a GPRS communication module. The power supply module includes the solar panel, a charging circuit, the rechargeable battery and a power supply circuit. The solar panel charges the rechargeable battery through the charging circuit, and an electric energy outputted by the rechargeable battery is supplied to the master controller through the power supply circuit. As shown in Fig. 3, the Bluetooth master control board includes a Bluetooth chip, a CPU, a FLASH, a RAM and an I/O interface. An output end of the master controller is electrically connected to the acousto-optic indication module. As shown in Fig. 4, a specific shape structure of the induction device includes a front cover and a rear cover which are fixed by bolts. The front cover and the rear cover are consistent in a cross-sectional shape and are both provided with a groove. The grooves are provided for matching with mounting positions during mounting, such as mounting the induction device on a front fork of the Vehicle or on the parking rack on the ground, so that the induction device may be mounted more stably after being provided with the grooves. The master controller (the figure shows a back surface of a master circuit board, and only the Bluetooth chip is shown), the near-field communication module, the far-field communication module, the inductor, the acousto-optic indication module as well as the charging circuit, the rechargeable battery and the power supply circuit of the power supply module are disposed on the master circuit board. The master circuit board is disposed on an inside surface of the front cover and covered by the rear cover. The solar panel is disposed on an outside surface of the front cover. The outside surface of the front cover close to an end of the inductor is an induction surface. The induction surface is a plane. A label area is disposed on an outside surface of the rear cover. In the embodiment, the inductor is two reed switches, and the trigger matched with the reed switches is the magnet during use.

The communication module may be selected according to requirements during use. For example, when a site indicator is provided or a smart lock of the Vehicle is provided with the GPRS communication module, the induction device only needs to be provided with the near-field communication module, so that a Bluetooth communication mode is selected to transmit arrival information corresponding to induction information to the smart lock of the Vehicle or the site indicator, and the smart lock or the site indicator sends the arrival information to the background server, thus facilitating management of the Vehicle. Certainly, in this case, the far-filed communication module, such as the GPRS, may also be provided simultaneously, which is used for directly transmitting the information to the background server. When the site indicator is not provided or the smart lock of the Vehicle is not provided with the GPRS communication module, the far-field transmission module may be directly selected, so that no modification may be made to the site or the Vehicle.

The following example illustrates that, as shown in Fig. 1, if the induction device 2 is disposed on the Vehicle 1, the triggering device 4 is disposed on the parking rack 3. When the Vehicle 1 is parked in the parking rack 3, the inductor and the trigger form triggering induction, and the Bluetooth communication module sends a broadcast message with the arrival information. An arrival signal is externally transmitted, which may be sent to a Bluetooth lock of the Vehicle or the site indicator. The site indicator may also send the received signal to the background server (if the Bluetooth lock is provided with the GPRS module, the Bluetooth lock may also send the signal to the background server). Alternatively, the GPRS communication module directly sends the signal to the background server, thus facilitating background management of the Vehicle, and getting useful information, such as how many available Vehicles are parked in the parking area and the like.

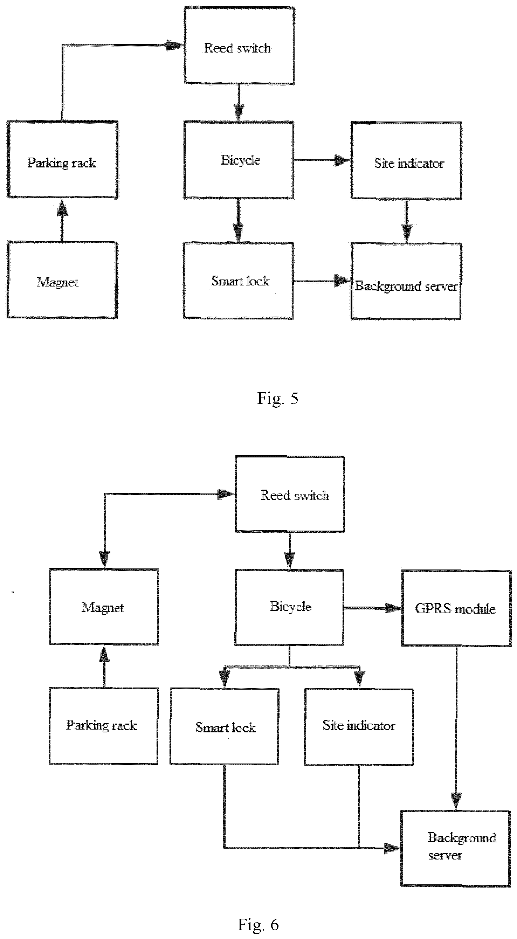

As shown in Fig. 5, the present invention further discloses a standardized parking system, which includes a Vehicle 1, a rack 2 and a triggering induction module set. The triggering induction module set is composed of an induction device 3 and a triggering device 4 which are matched with each other. The triggering device 4 is internally provided with a trigger. The induction device 3 includes a master controller, a near-field communication module, an inductor and a power supply module. The power supply module includes a solar panel and a rechargeable battery, and supplies power to the master controller. The near-field communication module and the inductor are both electrically connected to the master controller, the master controller sends an induction signal received by the inductor to a near-field management unit (a smart lock/a site indicator) through the near-field communication module, and then the near-field management unit sends the induction signal to a background server. The induction device 3 and the triggering device 4 are respectively mounted on the Vehicle 1 and the rack 2, and triggering induction of the inductor and the trigger is able to be formed at mounting positions. In order to obtain a best induction effect, as shown in Fig. 1, mounting angles of the induction device 3 and the triggering device 4 enable an induction surface 3-1-1 and a triggering surface 4-1-1 to be parallel to each other.

As shown in Fig. 2 to Fig. 4, the induction device 3 includes the master controller, the near-field communication module and/or a far-field communication module, the inductor, an acousto-optic indication module and the power supply module. The power supply module includes the solar panel and the rechargeable battery, and supplies power to the master controller. The near-field communication module and/or the far-field communication module and the inductor are both electrically connected to the master controller, and the master controller sends the induction signal received by the inductor to the near-field management unit through the near-field communication module and/or the master controller sends the induction signal received by the inductor to the background server through the far-field communication module. The master controller is a Bluetooth master control board. The near-field communication module is a Bluetooth communication module. The far-field communication module is a GPRS communication module. The power supply module includes the solar panel, a charging circuit, the rechargeable battery and a power supply circuit. The solar panel charges the rechargeable battery through the charging circuit, and an electric energy outputted by the rechargeable battery is supplied to the master controller through the power supply circuit. As shown in Fig. 3, the Bluetooth master control board includes a Bluetooth chip, a CPU, a FLASH, a RAM and an I/O interface. An output end of the master controller is electrically connected to the acousto-optic indication module. As shown in Fig. 4, a specific shape structure of the induction device includes a front cover and a rear cover which are fixed by bolts. The front cover and the rear cover are consistent in a cross-sectional shape and are both provided with a groove. The grooves are provided for matching with mounting positions during mounting, such as mounting the induction device on a front fork of the Vehicle or the parking rack on the ground, so that the induction device may be mounted more stably after being provided with the grooves. The master controller, the near-field communication module, the far-field communication module, the inductor, the acousto-optic indication module as well as the charging circuit, the rechargeable battery and the power supply circuit of the power supply module are disposed on a master circuit board. The master circuit board is disposed on an inside surface of the front cover and covered by a rear cover. The solar panel is disposed on an outside surface of the front cover 1. The outside surface of the front cover close to an end of the inductor is an induction surface. The induction surface is a plane. A label area is disposed on an outside surface of the rear cover. In the embodiment, the inductor is two reed switches, and the trigger matched with the reed switches is a magnet during use. As shown in Fig. 1, the trigger of the triggering device 4 is disposed in a mounting box body 4-1, an outside surface of the mounting box body 4-1 is a triggering surface 4-1-1, and the triggering surface 4-1-1 of the triggering device 4 is a plane. The triggering surface 4-1-1 of the triggering device 4 is provided with a flexible anti-collision pad 4-2. The mounting box body 4-1 of the triggering device 4 is provided with a groove.

As shown in Fig. 6, the induction device 3 in the embodiment is further provided with the far-field communication module, and the signal may be directly sent to the background server through the far-field communication module.

As shown in Fig. 1, the induction device 3 in the embodiment is mounted on the parking rack 2, and the parking rack 2 is fixed on the ground through a mounting plate 5. In the solution, the induction device 3 may be supplied with continuous electric energy by embedding a wire and a cable in the ground and wiring in the parking rack, and a storage battery may also be mounted on the parking rack 2 to supply power, so that the induction device 3 has no need for battery replacement, thus being more convenient to use.

The following example illustrates that when the Vehicle 1 is parked in the parking rack 2, the inductor and the trigger form the triggering induction.

The master controller of the induction device 3 receives triggering induction information and transmits the triggering induction information to the smart lock of the Vehicle or the site indicator through the near-field communication module, and the smart lock or the site indicator transmits the triggering induction information to the background server.

Optionally, the master controller of the induction device 3 receives the triggering induction information and transmits the triggering induction information to the background server through the far-field communication module.

Optionally, the master controller of the induction device 3 receives the triggering induction information and transmits the triggering induction information to the smart lock of the Vehicle or the site indicator through the near-field communication module, the smart lock or the site indicator transmits the triggering induction information to the background server, and the master controller of the induction device 3 simultaneously transmits the triggering induction information to the background server through the far-field communication module.

## Claims

1. A triggering induction module set for parking a Vehicle, wherein,
the triggering induction module set comprises a triggering device and an induction device which are respectively disposed on a parking rack where the Vehicle is parked and the Vehicle, or disposed on the Vehicle and the parking rack; and when the Vehicle is placed in the parking rack, the triggering device and the induction device form triggering induction, and the induction device reads the triggering device and sends an arrival induction signal to a safety lock of the Vehicle, thus controlling the safety lock to enter a locked state.

2. The triggering induction module set according to claim 1, wherein,
the triggering device comprises a triggering module; the induction device comprises an induction module and a control module which are electrically connected; and when the Vehicle is placed in the parking rack, the triggering module and the induction module form the triggering induction, and the control module controls the induction module to read the triggering module and sends the arrival induction signal to the safety lock of the Vehicle, thus controlling the safety lock to enter the locked state.

3. The triggering induction module set according to claim 2, wherein,
the induction device further comprises a power supply module; the power supply module comprises a solar panel, a charging circuit, a rechargeable battery and a power supply circuit; and the solar panel charges the rechargeable battery through the charging circuit, and an electric energy outputted by the rechargeable battery is supplied to the control module through the power supply circuit.

4. The triggering induction module set according to claim 2, wherein,
the induction device further comprises a prompting module; and when the triggering device and the induction device form the triggering induction, the prompting module externally sends an acoustical signal or a light signal.

5. The triggering induction module set according to claim 1, wherein,
a side of the induction device facing the triggering device is an induction surface, and the induction surface is a plane; and a side of the triggering device facing the induction device is a triggering surface, and the triggering surface is a plane.

6. The triggering induction module set according to claim 5, wherein,
the triggering surface is provided with an anti-collision pad, and the anti-collision pad is made of an elastic material.

7. The triggering induction module set according to claim 1, wherein,
the induction device is disposed on a front fork of the Vehicle, and the safety lock is disposed on a rear fork of the Vehicle.

8. A triggering module set for a parking system, comprising a triggering device and an induction device, wherein,
the triggering device comprises a mounting box and a triggering module disposed in the mounting box, the induction device comprises a shell and a circuit board disposed in the shell, wherein the circuit board is provided with a first control module and an induction module, the first control module is electrically connected to the induction module, the induction device is in near-field communication with the triggering device, the induction module switches on a driving circuit when inducing the triggering module, so as to start the first control module to read the triggering device, thus generating a broadcast message and externally sending the broadcast message.

9. The triggering module set according to claim 8, wherein,
the shell comprises a front cover, a base and a side cover, wherein the base is L-shaped, two side edges of the base are communicated with each other, one sides of the two side edges facing the outside are respectively provided with a first opening and a second opening, the front cover is fixedly connected to the first opening, the side cover is fixedly connected to the second opening, an L-shaped storage space is formed inside the base, and the circuit board is L-shaped and fixed in the storage space.

10. The triggering module set according to claim 8, wherein,
the induction module comprises at least one reed switch, and the reed switch switches on the driving circuit when inducing the triggering device, so as to start the first control module to read the triggering device.

11. The triggering module set according to claim 8, wherein,
the mounting box comprises a box body and a cover body, the cover body is fixedly connected to the box body to form a storage space, the triggering module and a storage module are disposed in the storage space, and after being started, the first control module reads the storage module, thus generating the broadcast message and externally sending the broadcast message.

12. The triggering module set according to claim 8, wherein,
the triggering module comprises a magnet, and the induction device switches on the driving circuit when inducing the magnet, so as to start the first control module to read the triggering device.

13. A smart parking rack, comprising a rack body and an identity induction module disposed on the rack body, wherein the identity induction module is a triggering device or an induction device; the triggering device is internally provided with a trigger; the induction device comprises a master controller, a near-field communication module and/or a far-field communication module, an inductor and a power supply module; the power supply module comprises a solar panel and a rechargeable battery, and supplies power to the master controller; and the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module.

14. The smart parking rack according to claim 13, wherein the master controller of the induction device is a Bluetooth master control board; the near-field communication module is a Bluetooth communication module; and the far-field communication module is a GPRS communication module.

15. The smart parking rack according to claim 14, wherein the power supply module of the induction device comprises the solar panel, a charging circuit, the rechargeable battery and a power supply circuit; the solar panel charges the rechargeable battery through the charging circuit, and an electric energy outputted by the rechargeable battery is supplied to the master controller through the power supply circuit; the Bluetooth master control board comprises a Bluetooth chip, a CPU, a FLASH, a RAM and an I/O interface; and an output end of the master controller is electrically connected to an acousto-optic indication module.

16. The smart parking rack according to claim 15, wherein the master controller, the near-field communication module, the far-field communication module, the inductor, the acousto-optic indication module as well as the charging circuit, the rechargeable battery and the power supply circuit of the power supply module are disposed on an inside surface of a front cover and covered by a rear cover; and the solar panel is disposed on an outside surface of the front cover.

17. The smart parking rack according to claim 16, wherein the master controller, the near-field communication module, the far-field communication module, the inductor, the acousto-optic indication module as well as the charging circuit, the rechargeable battery and the power supply circuit of the power supply module are disposed on a master circuit board.

18. The smart parking rack according to claim 17, wherein the trigger of the triggering device is disposed in a mounting box body, and an outside surface of the mounting box body is a triggering surface.

19. The smart parking rack according to claim 18, wherein the outside surface of the front cover of the induction device close to an end of the inductor is an induction surface; the induction surface is a plane; and the triggering surface of the triggering device is a plane.

20. The smart parking rack according to claim 19, wherein the triggering surface of the triggering device is provided with a flexible anti-collision pad.

21. The smart parking rack according to claim 20, wherein the front cover and the rear cover of the induction device are consistent in a cross-sectional shape and are both provided with a groove; and the mounting box body of the triggering device is provided with a groove.

22. The smart parking rack according to claim 21, wherein a label area is disposed on an outside surface of the rear cover of the induction device.

23. A Vehicle with an identity induction module, comprising a Vehicle and an identity induction module disposed on the Vehicle, wherein the identity induction module is a triggering device or an induction device; the triggering device is internally provided with a trigger; the induction device comprises a master controller, a near-field communication module and/or a far-field communication module, an inductor and a power supply module; the power supply module comprises a solar panel and a rechargeable battery, and supplies power to the master controller; and the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module.

24. The Vehicle with the identity induction module according to claim 23, wherein the identity induction module is disposed at a front end of the Vehicle.

25. The Vehicle with the identity induction module according to claim 24, wherein the master controller of the induction device is a Bluetooth master control board; the near-field communication module is a Bluetooth communication module; and the far-field communication module is a GPRS communication module.

26. The Vehicle with the identity induction module according to claim 25, wherein the power supply module of the induction device comprises the solar panel, a charging circuit, the rechargeable battery and a power supply circuit; the solar panel charges the rechargeable battery through the charging circuit, and an electric energy outputted by the rechargeable battery is supplied to the master controller through the power supply circuit; the Bluetooth master control board comprises a Bluetooth chip, a CPU, a FLASH, a RAM and an I/O interface; an output end of the master controller is electrically connected to an acousto-optic indication module; the master controller, the near-field communication module, the far-field communication module, the inductor, the acousto-optic indication module as well as the charging circuit, the rechargeable battery and the power supply circuit of the power supply module are disposed on an inside surface of a front cover and covered by a rear cover; and the solar panel is disposed on an outside surface of the front cover.

27. The Vehicle with the identity induction module according to claim 26, wherein the master controller, the near-field communication module, the far-field communication module, the inductor, the acousto-optic indication module as well as the charging circuit, the rechargeable battery and the power supply circuit of the power supply module are disposed on a master circuit board.

28. The Vehicle with the identity induction module according to claim 27, wherein the trigger of the triggering device is disposed in a mounting box body, and an outside surface of the mounting box body is a triggering surface.

29. The Vehicle with the identity induction module according to claim 28, wherein the outside surface of the front cover of the induction device close to an end of the inductor is an induction surface; the induction surface is a plane; and the triggering surface of the triggering device is a plane.

30. The Vehicle with the identity induction module according to claim 29, wherein the triggering surface of the triggering device is provided with a flexible anti-collision pad.

31. The Vehicle with the identity induction module according to claim 30, wherein the front cover and the rear cover of the induction device are consistent in a cross-sectional shape and are both provided with a groove; and the mounting box body of the triggering device is provided with a groove.

32. The Vehicle with the identity induction module according to claim 31, wherein a label area is disposed on an outside surface of the rear cover of the induction device.

33. A standardized parking system, comprising a Vehicle, a rack and a triggering induction module set, wherein the triggering induction module set is composed of an induction device and a triggering device which are matched with each other; the triggering device is internally provided with a trigger; the induction device comprises a master controller, a near-field communication module and/or a far-field communication module, an inductor and a power supply module; the power supply module comprises a solar panel and a rechargeable battery, and supplies power to the master controller; the near-field communication module and/or the far-field communication module and the inductor are both electrically connected to the master controller, and the master controller sends an induction signal received by the inductor to a near-field management unit through the near-field communication module and/or the master controller sends the induction signal received by the inductor to a background server through the far-field communication module; and the induction device and the triggering device are respectively mounted on the Vehicle and the rack, or mounted on the rack and the Vehicle, and triggering induction of the inductor and the trigger is able to be formed at mounting positions.

34. A management method for a standardized parking system, wherein the standardized parking system according to claim 33 is provided, and when the Vehicle is parked in the parking rack, the inductor and the trigger form the triggering induction; the master controller of the induction device receives triggering induction information and transmits the triggering induction information to a smart lock of the Vehicle or a site indicator through the near-field communication module, and the smart lock or the site indicator transmits the triggering induction information to the background server; or the master controller of the induction device receives the triggering induction information and transmits the triggering induction information to the background server through the far-field communication module; or the master controller of the induction device receives the triggering induction information and transmits the triggering induction information to the smart lock of the Vehicle or the site indicator through the near-field communication module, the smart lock or the site indicator transmits the triggering induction information to the background server, and the master controller of the induction device simultaneously transmits the triggering induction information to the background server through the far-field communication module.
